# EUROPÄISCHE PATENTSCHRIFT

(11) **EP 1 274 559 B1**
(45) Veröffentlichungstag und Bekanntmachung des Hinweises auf die Patenterteilung: **23.02.2005**
(21) Anmeldenummer: 00983203.1
(22) Anmeldetag: 01.12.2000
(51) Int. Cl.: B29C 67/00, A61K 9/00, B29C 31/04, B29C 41/36

(54) **VORRICHTUNG UND VERFAHREN ZUM HERSTELLEN VON DREIDIMENSIONALEN OBJEKTEN**
DEVICE AND METHOD FOR THE PRODUCTION OF THREE-DIMENSIONAL OBJECTS
DISPOSITIF ET PROCEDE POUR PRODUIRE DES OBJETS TRIDIMENSIONNELS

(30) Priorität: 17.04.2000 DE 10018987
(43) Veröffentlichungstag der Anmeldung: 15.01.2003
(73) Patentinhaber: Envisiontec GmbH, 45768 Marl (DE)
(72) Erfinder: MÜLHAUPT, Rolf, 79117 Freiburg (DE); LANDERS, Rüdiger, 79104 Freiburg (DE); JOHN, Hendrik, 46569 Hünxe (DE)
(74) Vertreter: Prüfer, Lutz H., Dipl.-Phys.
(86) Internationale Anmeldenummer: PCT/EP2000/012102
(87) Internationale Veröffentlichungsnummer: WO 2001/078968

(56) Entgegenhaltungen:
- WO-A-95/11007
- DE-A- 4 102 257
- FR-A- 2 254 194
- FR-A- 2 583 334
- FR-A- 2 634 686
- US-A- 5 653 925

## Beschreibung

Die vorliegende Erfindung betrifft ein Verfahren zum Herstellen eines dreidimensionalen Objektes gemäß dem Oberbegriff des Patentanspruchs 1, eine Vorrichtung zur Durchführung des Verfahrens gemäß dem Oberbegriff des Patentanspruchs 24, sowie die Verwendung von biologisch oder pharmazeutisch aktiven Substanzen in diesem Verfahren und/oder in dieser Vorrichtung.

Es ist bekannt, dreidimensionale Objekte ausgehend von einem CAD-Modell des Objekts Schicht für Schicht herzustellen. Bei dem bekannten Verfahren der Stereolithographie werden Monomere in Anwesenheit von Photoinitiatoren durch Laserstrahlung polymerisiert. Als Materialien eignen sich jedoch nur eine begrenzte Anzahl von Monomerarten. In der 3D-Drucktechnologie wird die Tintenstrahltechnik angewendet, um Pulverteilchen in der jeweiligen Schicht an den dem Querschnitt des Objekts entsprechenden Stellen mit Klebstoffen zu binden. Diese Technologie, wie auch die Stereolithographie, erfordern jedoch eine Nachbehandlung der entstandenen Rohlinge.

Zudem sind für die Bildung von dreidimensionalen Objekten mit Vorsprüngen, Protuberanzen und Unterhöhlungen Stützkonstruktionen erforderlich, um eine Verbiegen oder Brechen des dreidimensionalen Objekts zu verhindern.

Eine andere Technik zur Generierung von dreidimensionalen Modellen ist das Selektive Lasersintern. Dabei wird ein pulverförmiges Material schichtweise aufgetragen und die jeweils oberste Pulverschicht an dem Querschnitt des Modells entsprechenden Stellen mit einem Laserstrahl belichtet. Das Pulver schmilzt oder sintert dort durch den Energieeintrag des Lasers. Die thermische Belastung des Materials ist jedoch hoch, so daß empfindliche Polymere zerstört werden. Eine Inkorporation biologischer Komponenten wie z.B. Zellen oder Proteine ist nicht möglich. Auch die Generierung von Hydrogelen ist nicht möglich.

Die WO 95/11007 A betrifft die Herstellung medizinischer Vorrichtungen durch feste Freiform-Herstellungsmethoden wie der Stereolitographie, der selektiven Lasersinterung, der ballistischen Teilchenherstellung, der Fusionsabscheidungsmodellierung und dem dreidimensionalen Drucken.

Die US-A-5 653 925 betrifft ein Verfahren zur Einstellung der Porosität eines dreidimensionalen Modells.

Die FR-A-2 254 194 beschreibt ein Verfahren zum Erzeugen von ästhetischen Fluidsuspensionen, bei dem die ästhetischen Gestaltungen eines gefärbten und ggf. Bläschen aufweisenden Gelmaterials über eine Injektion in einer Masse eines anderen, farblosen Gelmaterials gebildet werden. Die Formstabilität der ästhetischen Gestaltung wird über die Materialkonsistenzen der jeweils verwendeten Gelmaterialien erhalten.

Gemäß der DE-A-4 102 257 erfolgt eine Herstellung von Kunststoffteilen durch Lasereinstrahlung und Fotohärtung einer durch energiereiche Strahlung aushärtbaren Flüssigkeit (flüssiger Kunststoff), die in einem Behälter (kastenförmige Wanne) enthalten ist.

Aus der FR-A-2 634 686 ist ein Verfahren bzw. eine Vorrichtung bekannt, bei dem bzw. der ein Faden 3 eines gefärbten Produkts, d.h. ein bereits verfestigtes Material, in einem mit einem Gel 2 gefüllten Behälter injiziert wird.

Aus der FR 2 583 334 A ist ein Verfahren zur Ausbildung von dreidimensionalen Modellen gemäß dem Oberbegriff des Anspruchs 1 bekannt. Darin wird ein Photoinitiator zu einer Monomerflüssigkeit gegeben und das Monomer durch Bestrahlung ausgehärtet. Alternativ wird ein mit einem thermischen Initiator reagierendes Monomer in eine neutrale Flüssigkeit gegeben. Die Genauigkeit der Ausbildung des dreidimensionalen Objekts und die Anzahl der verwendbaren Materialien ist jedoch begrenzt. Das Verfahren gemäß der FR 2 583 334 A dient zur Herstellung von Modellen industrieller Teile.

In der Technologie des Fused Deposition Modeling (FDM) werden thermoplastische Polymere aufgeschmolzen. Die flüssige Schmelze verläßt die Düsen als Strang und baut durch Erkalten an Luft dreidimensionale Objekte auf. Dieses Verfahren ist limitiert auf thermoplastische Polymere mit einer hohen Schmelzviskosität. Die Breite der hier bisher erfolgreich eingesetzten Materialien beschränkt sich auf Acrylnitril-Butadien-Styrol-Copolymere und Polycaprolacton. Die Verarbeitungstemperatur übersteigt dabei 100°C; dies verhindert die Inkorporation thermisch empfindlicher Zusätze in das hergestellte 3D-Objekt.

Aufgabe der Erfindung ist die Bereitstellung einer verbesserten Vorrichtung bzw. eines verbesserten Verfahrens zum Herstellen dreidimensionaler Objekte.

Diese Aufgabe wird gelöst durch ein Verfahren nach Anspruch 1, eine Vorrichtung nach Anspruch 24 bzw. eine Verwendung nach Anspruch 27.

Weiterbildungen der Erfindung sind in den Unteransprüchen angegeben.

Bei dem erfindungsgemäßen Verfahren wird eine Ausgangsöffnung eines dreidimensional bewegbaren Dispens ers in einem ersten Material (2) - dem Plotmedium - positioniert und ein aus einer oder mehreren Komponenten bestehendes zweites Material (3), das in Kontakt mit dem ersten Material (2) zur Ausbildung fester Strukturen führt, wird in das erste Material (2) zur Ausbildung dreidimensionaler Objekte abgegeben.Im folgenden wird das erste Material 2 als Medium bzw. Plotmedium 2 und das zweite Material 3 als Material 3 bezeichnet, um eine bessere Unterscheidung zwischen erstem (2) und zweitem (3) Material vornehmen zu können.

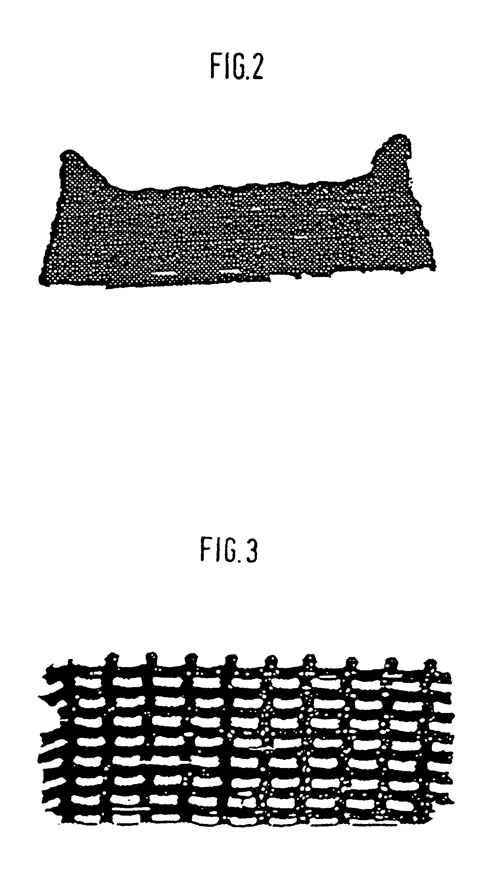

Die Wirkung des Mediums (2) besteht dabei zum einen in einer Auftriebskompensation als auch in einer Dämpfung der Bewegung des dosierten, noch flüssigen Materials (3).
Die beiden Effekte zeigen sich deutlich in den Fig. 2 und 3. Bei Fig. 2 führt die mangelnde Auftriebskompensation zu einem Verfließen der dreidimensionalen Gitterstruktur des Datensatzes. Dagegen ist bei Fig. 3 die Gitterstruktur gut ausgebildet und die Hohlraumstruktur zwischen den Schichten bleibt voll erhalten.
Diese technische Änderung, "Plotten" (Dispergieren) eines Materials (3) in ein Medium (2) mit entsprechenden rheologischen, im folgenden näher beschriebenen Eigenschaften, führt zu einer wesentlichen Ausweitung der Breite verwendbarer Materialien.
Zum einen lassen sich das (die) Material(ien) (3) mit geringer Viskosität zu komplizierten dreidimensionalen Objekten aufbauen. Zum anderen kann das Medium (2) in reaktiver Form in den Härtungsprozeß des Materials (3) einbezogen werden. Hierbei können chemische Reaktionen ablaufen, aber auch Fällungs- und Komplexbildungsreaktionen. Die Polarität des Materials 2 variiert abhängig von der Polarität des Materials (3) von hydrophil (z.B. Wasser) bis völlig unpolar (z.B. Silikonöl) um die Haftungseigenschaften der Schichten aneinander zu steuern.
Auf eine Stützkonstruktion kann bei dem hier beschriebenen Verfahren zum Aufbau dreidimensionaler Objekte fast immer verzichtet werden.
Ein sehr wichtiges Detail der Erfindung beruht auf der Temperaturvariabilität des Verfahrens. In Verbindung mit der großen Zahl möglicher Medium (2)/Material (3)-Kombinationen sind Verarbeitungsbedingungen auch bei Raumtemperatur realisierbar.

So können Pharmaka oder lebende, beispielsweise menschliche Zellen in 3D-Strukturen eingebaut werden.

In einer Weiterbildung des Verfahrens wird als Medium (2) Gelatinelösung oder Wasser und als Material (3) Silikonkautschuk verwendet.

In einer Weiterbildung des Verfahrens wird als Medium (2) Wasser und als Material (3) ein naß aushärtbares Silikon mit Acetoxysilangruppen verwendet.

In einer Weiterbildung des Verfahrens wird als Medium (2) Wasser, ein Polyol oder eine Lösung polyfunktioneller Amine und als Material (3) ein Polyurethan (präpolymer) mit Isocyanatgruppen verwendet.

In einer Weiterbildung des Verfahrens wird als Medium (2) eine wässrige Lösung von Calciumionen und Thrombin verwendet, als Material (3) eine wässrige Lösung von Fibrinogen.

In einer Weiterbildung des Verfahrens wird als Medium (2) eine wässrige Lösung von Calciumionen und Thrombin verwendet, als Material (3) eine wässrige Lösung von Fibrinogen mit lebenden menschlichen oder Säugetierzellen (z.B. Fibroplasten).

In einer Weiterbildung des Verfahrens wird als Medium (2) eine Lösung eines Polyelektrolyten verwendet, als Material (3) eine Lösung von mehrwertigen Kationen, mehrwertigen Anionen oder eines Polyelektrolyten.

In einer Weiterbildung des Verfahrens wird als Medium (2) eine Lösung von Calciumionen und/oder von protoniertem Chitosan und/oder Thrombin und als Material (3) eine Lösung von Na-Alginat und/oder Fibrinogen sowie lebenden menschlichen oder Säugetierzellen verwendet.

In einer Weiterbildung des Verfahrens wird als Medium (2) eine wässrige Lösung eines Proteins verwendet und als Material (3) eine Salzlösung.

In einer Weiterbildung des Verfahrens wird dem Material und/oder dem Medium eine reaktionsverzögernde Substanz zugegeben. Damit wird gewährleistet, daß das zugegebene Material an zuvor ausgehärtetem bzw. verfestigeten Material anhaftet.

Weitere Merkmale und Zweckmäßigkeiten ergeben sich aus der folgenden Beschreibung von Ausführungsformen anhand der beiliegenden Figuren. Von diesen zeigen:
- Fig. 1: eine schematische Darstellung einer Vorrichtung einer Ausführungsform der Erfindung;
- Fig. 2: einen Querschnitt durch ein geplottetes 3D-Objekt; Plotmedium (2) = Luft, Material (3) = PU-Präpolymer;
- Fig. 3: einen Querschnitt durch ein geplottetes 3D-Objekt; Plotmedium (2) = Wasser, Material (3) = PU-Präpolymer; und
- Fig. 4: eine schematische Querschnittsansicht einer weiteren Ausführungsform der Erfindung.

Im folgenden wird das Prinzip der Erfindung erläutert.

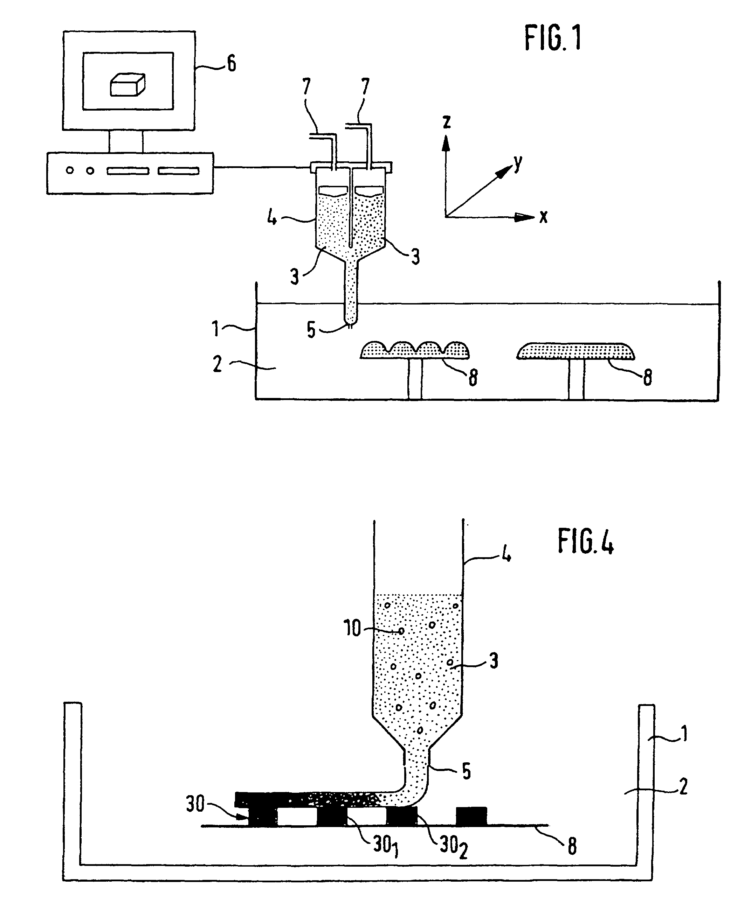

Die in Fig. 1 gezeigte Vorrichtung weist einen Behälter 1, einen Dispenser 4 und eine Steuerung 6 für den Dispenser 4 auf. Die Vorrichtung wird im folgenden auch als 3D-Plotter bezeichnet.

Im Behälter 1 sind eine oder mehrere Plattformen 8 vorgesehen, auf denen das bzw. die dreidimensionalen Objekte ausgebildet werden. In den Behälter 1 kann ein Medium 2, das auch als Plotmedium bezeichnet wird, in einer vorbestimmten Füllhöhe eingefüllt werden.

Der Dispenser 4 ist an einem in Fig. 1 nicht gezeigten Stativ angebracht und mindestens in drei Achsen x, y, z wie der Fräskopf einer computergesteuerten Fräßmaschine bewegbar. Als Dispenser 4 wird beispielsweise eine mindestens dreiachsige, Rechner-NC-gesteuerte Fräse verwendet, bei der der Fräskopf durch den Dispenser ersetzt ist. Der Dispenser 4 besteht aus einem Düsenelement mit Materialeingangs- und - ausgangsöffnung(en) 5. An die Materialeingangsöffnung(en) sind ein oder mehrere austauschbare Kartuschen für eine oder mehrere Material-Komponente(n) 3 angeschlossen, wobei die Material-Komponente(n) 3 in das Medium 2 zur Ausbildung dreidimensionaler Objekte zugegeben werden. Um die Materialkomponente(n) 3 kontrolliert durch das Düsenelement in das Medium 2 eintreten zu lassen, kann über die Zuleitungen 7 geregelt Pressluft oder ein anderes geeignetes, getrocknetes Inertgas (Stickstoff, Argon), je nach dosiertem Material 3, in die Kartuschen eingeleitet werden.. Der Dispenser 4 ist derart oberhalb und innerhalb des Behälters 1 in den drei Richtungen bewegbar, daß das Düsenelement mit seiner Ausgangsöffnung 5 unterhalb der Füllhöhe des Mediums 2 innerhalb des Behälters 1 positionierbar ist.

Die Ausgangsöffnung 5 ist als einzelne Düse oder als Düsenfeld ausgebildet. Bei kommerziell erhältlichen Düsen für Pressluft betriebene Dispenser-Systeme liegen die kleinsten Innendurchmesser der Ausgangsöffnung 5 bei etwa 150µm.

Eine andere Möglichkeit der Dosierung des Materials 3 - ohne Verwendung von Pressluft, bzw. eines Inertgases - kann durch eine Pumpe als Verbindung zwischen Kartusche und Düsenelement erfolgen, bei der das Material selbst durch die Pumpe von der Kartusche in das Düsenelement gefördert wird.
Eine Abwandlung dieser Möglichkeit sieht vor, die Funktion Pumpe/Ventil/Düse in dem Düsenelement durch eine mechatronische Lösung zu integrieren.

Die Steuerung 6 ist so ausgebildet, daß sie die dreidimensionale Bewegung des Dispensers 4, sowie die Abgabe der Material-Komponente(n) 3 aus dem Dispenser steuert. Es handelt sich dabei um eine Rechner-NC-Steuerung, die zusätzlich mit einem CAD/CAM- und/oder Bildverarbeitungssystem gekoppelt sein kann.

Das Medium 2, d.h. das Plotmedium ist ein flüssiges, thixotropes, gelartiges, pastöses, festes, pulverförmiges, als Granulat vorliegendes Material. Als Plotmedium kann ein co-reaktives Medium, das mit der oder den Material-Komponente(n) 3 Reaktionen eingeht, z.B. anionische oder kationische Polyelektrolyte, Polyelektrolyt-Salzmischungen oder Substanzen mit co-reaktiven funktionellen Gruppen verwendet werden. Alternativ sind im Plotmedium Fällmittel für die Material-Komponente(n) 3 enthalten.

Die Material-Komponenten 3, die von dem Dispenser in das Plotmedium 2 abgegeben werden, sind flüssige, gelartige, pastöse Materialien. Beispiele für die Material-Komponenten 3 sind bei Raumtemperatur flüssige Oligomere und Polymere, Schmelzen von Oligomeren und Polymeren ("Heißschmelzen"), reaktive Oligomere und Polymere, Monomere, Gele, z.B. Ein- oder Zwei-Komponenten-Silikonkautschuke, Pasten, zum Beispiel gefüllte Oligomere und Polymere mit organischen und anorganischen Füllstoffen, Plastisole, d.h. in Weichmacher dispergierte Polymerpulver, Lösungen, Zwei-Komponenten-Systeme mit co-reaktiven Komponenten, z.B. Isocyanate/Alkohole und Dispersionen.

Das Medium 2 und die Material-Komponente(n) 3 können so gewählt sein, daß durch Zudosierung der Material-Komponente(n) 3 in das Medium 2 dieses durch die oder mit der/den Material-Komponente(n) 3 gelöst, gebunden, geschmolzen, gehärtet oder verklebt wird. Umgekehrt kann/können die Material-Komponente(n) 3 durch das oder mit dem Medium 2 gelöst, gebunden, geschmolzen, gehärtet oder verklebt werden.

Es kann ein Medium 2 gewählt werden mit einer Dichte, die derjenigen der Material-Komponente(n) 3 gleich oder annähernd gleich bzw. etwas kleiner/größer ist, um bei vorspringenden Teilen der zu bildenden Struktur ein Durchbiegen des Aufbaus zu kompensieren. Alternativ kann aufgrund einer thixotropen, gelartigen, pastösen oder pulverförmigen Konsistenz des Mediums 2 ein Durchbiegen und Positionsveränderungen der zu bildenden Struktur im Plotmedium durch das Medium 2 selbst verhindert werden.

In jedem Fall führt die Zugabe der Material-Komponente(n) 3 in das Medium 2 unmittelbar zur Ausbildung dreidimensionaler fester Strukturen. Es sind keine zusätzlichen Hilfsmittel, wie z.B. Bestrahlung erforderlich.

### Erste Ausführungsform

Es folgt die Beschreibung einer ersten Ausführungsform der Erfindung.

Ein pneumatisch betriebener Dispenser 4 des oben beschriebenen Prinzips ist mit einer Kartusche versehen und weist als Ausgangsöffnung 5 eine Nadel mit einem Innendurchmesser von etwa 250 µm auf. Zur Regulierung des Druckes innerhalb der Kartuschen ist an die Zuleitungen 7 über Schläuche ein Dosierventil angeschlossen. Dieses reduziert die eingeleitete Druckluft von 7 bar auf den vom Material (3) abhängigen nötigen Kartuschendruck. Zusätzlich kann das Reduzierventil durch die Steuerung 6 vollständig geschlossen werden, um den Dosiervorgang zu starten oder zu unterbrechen.

Im Betrieb wird der Behälter 1 mit Wasser gefüllt. In die Kartusche des Dispensers 4 wird ein Silikonharz eingefüllt, das mit Wasser aushärtbar ist. Im Silikon sind sind Acetoxysilane, die bei der Hydrolyse in Anwesenheit von Wasser eine säurekatalytische Silanol-Polykondensation bewirken, enthalten.

Über die Steuerung 6 wird das freie Nadelende oberhalb der Plattform 8 an einer Ausgangsposition innerhalb vorbestimmter Abmessungen des zu bildenden dreidimensionalen Objekts, die durch ein Computermodell des Objekts vorgegeben sind, positioniert. Dann wird das Silikon den vorbestimmten Abmessungen entsprechend bei einem Arbeitsdruck von etwa 0,8 bar und bei Raumtemperatur auf die Plattform 8 zur Ausbildung einer ersten Schicht des dreidimensionalen Objektes aufgebracht. Die Nadel des Dispensers wird parallel zur Plattform durch die Steuerung 6 derart bewegt, daß eine Verfahrgeschwindigkeit in XY-Richtung von etwa 11 bis 12 m/h eingestellt wird. Das Silikon härtet dabei unmittelbar nach der Zugabe in das Wasser aus.

Die Zugabe des Materials 3 auf die Plattform 8 in das Medium 2 erfolgt entweder portionsweise an einzelnen Punkten zur Ausbildung von Mikrodots (Mikro-Tropfen) oder kontinuierlich zur Ausbildung von Mikrosträngen bei gelartigen oder pastösen Materialen 3 und als Mikrostrahl bei flüssigen Materialien 3.

Nach Fertigstellung der ersten Schicht des dreidimensionalen Objekts wird die Dispensernadel durch Verändern der Position des Dispensers 4 in der in Fig. 1 gezeigten Z-Richtung oberhalb der ersten Schicht positioniert. Durch eine gesteuerte Bewegung des Dispenserkopfes und eine gesteuerte Zugabe von Silikon wird die zweite Schicht des dreidimensionalen Objektes ausgebildet. Diese Schritte werden wiederholt, so daß durch sukzessives Ausbilden von Schichten das dreidimensionale Objekt entsteht. Bei der Dosierung von Mikrosträngen muß der Strang zwischen den einzelnen Schichten nicht unbedingt getrennt werden. Dies ermöglicht den Aufbau des 3D-Objektes aus einem einzigen Mikrostrang.

Auf diese Weise können zum Beispiel gerüstartige dreidimensionale Objekte hergestellt werden, indem innerhalb der ersten Schicht parallel zueinander verlaufende Stränge in einer ersten Richtung ausgebildet werden. Zwischen den Strängen einer Ebene kann dabei ein Zwischenraum vorhanden sein. Dann werden bei der Ausbildung der zweiten Schicht zueinander parallele Stränge in einer zweiten Richtung ausgebildet. Durch Wiederholen dieser Schritte wird schließlich ein Gerüst aus Schichten von Strängen aufgebaut.

Mikrodots können nebeneinander, aufeinander oder auf Lücke ausgebildet werden. Ein spiralförmiges Abscheiden von Mikrodots oder Mikrosträngen führt zur Ausbildung von Röhren, deren Größe im Millimeter- bis Zentimeterbereich liegt, mit einem Innendurchmesser von etwa mindestens 100µm.

Werden dreidimensionale Objekte mit großen Vorsprüngen oder Einschnitten gebildet, kann es aufgrund der Schwerkraft zu einer Verbiegung des Objektes in Wasser kommen. Zur Vermeidung dieses Problems wird die Thixotropie des Silikons angepaßt, zum Beispiel durch Verflüssigen des Silikons während des Herstellungsprozesses durch Rühren, Schütteln oder Vibrationen oder durch Kontrolle der Silikon-Thixotropie mittels organischer und anorganischer Nanofüllstoffe. Alternativ wird anstelle von Wasser ein Medium mit einer Dichte gleicher oder ähnlicher, d.h. etwas kleiner/größer als derjenigen des Silikons verwendet. Als Folge werden Kräfte, die an Vorsprüngen des dreidimensionalen Objektes aufgrund der Schwerkraft wirken, durch den Auftrieb kompensiert. Eine andere Möglichkeit, Verbiegungen des dreidimensionalen Objektes zu verhindern, ist die Verwendung von thixotropen oder thermoreversiblen Gelen anstelle des Wassers, wie beispielsweise technische Gelatine, bei denen dann der Materialfluß des dosierten Materials vernachlässigbar ist.

In einer Modifikation des oben beschriebenen Verfahrens wird das Silikon während des Plottens durch andere Harze, beispielsweise durch Austauschen der Kartuschen ersetzt. Damit ergibt sich die Möglichkeit der Veränderung von Materialeigenschaften und Farben innerhalb des dreidimensionalen Objekts. Beispielsweise können auf diese Weise Gerüste aus einem Material ausgebildet werden, in die dichtere Schichten eines anderen Materials eingebaut sind.

### Zweite Ausführungsform

In einer zweiten Ausführungsform wird ein Dispenser 4 verwendet, der als Ausgangsöffnung 5 eine beheizbare Nadel aufweist. Als Material wird in einer Kartusche am Dispenser 4 ein Plastisol, d.h. ein in einem oder mehreren Weichmachern dispergiertes Polymerpulver vorgesehen. Im Behälter 1 ist Wasser vorgesehen. Das Plastisol wird unmittelbar vor der Abgabe in das Wasser innerhalb der beheizten Nadel geliert. Im Wasser wird das Plastisol abgekühlt und dadurch verfestigt. Zusätzlich kann das Plastisol auch in einem Ofen nachgeliert werden, um die strukturellen Eigenschaften des dreidimensionalen Objekts zu verbessern.
Ein anderes Beispiel sind PU-Präpolymere mit Isocyanat- und Hydroxygruppen. Diese befinden sich bei Raumtemperatur oder leicht abgekühlt in der Kartusche 4 und werden durch Erwärmen in der beheizten Nadel der Ausgangsöffnung 5 geliert.
Denkbar sind hier auch andere chemische Reaktionen, die zu einer Verfestigung/Gelierung führen und sich durch einen kurzen thermischen Impuls starten lassen.

### Dritte Ausführungsform

In der dritten Ausführungsform wird ein co-reaktives System aus mehreren Materialien verwendet. Der Dispenser 4 ist mit einer Kartusche und an der Ausgangsöffnung 5 mit einer Nadel versehen. In der Kartusche wird ein Polyurethan mit funktionellen Isocyanatgruppen vorgelegt. Der Behälter 1 ist mit Wasser oder einer wässrigen Aminlösung gefüllt. Bei der Zugabe des Polyurethans kommt es zur Reaktion mit dem Wasser oder mit der wässrigen Aminlösung und zur Aushärtung des co-reaktiven Systems.

In einer Modifikation dieser Ausführungsform ist der Dispenser 4 mit zwei Kartuschen versehen. In der einen Kartusche ist ein reaktives Harz und in der anderen Kartusche ist eine Komponente zum Aushärten des reaktiven Harzes enthalten. Unter Verwenden von Mischdüsen werden die in den Kartuschen vorgelegten Substanzen unter Ausschluß von Luft vor oder während der Zugabe in ein Plotmedium, wie beispielsweise Wasser gemischt. Das reaktive Harz und die Komponente zum Aushärten reagieren miteinander unter Ausbildung von festen dreidimensionalen Strukturen.

Alternativ können in der oben dargelegten Weise co-reaktive Systeme verwendet werden, die durch Grenzflächen-Polykondensationsreaktionen oder durch Polyelektrolyt-Komplexbildung zur Ausbildung fester dreidimensionaler Strukturen führen.

### Vierte Ausführungsform

In einer weiteren Ausführungsform ist in den Behälter 1 ein Medium 2 gefüllt, das mit dem Material 3 derart reagiert, daß nach Entfernung unreagierter Material-Komponenten 3 im Zentrum des Stranges Mikroröhren, bzw. -hohlräume gebildet werden. Diese Hohlräume wiederum können eine 3D-Struktur aufbauen. Beispiel hierfür sind Grenzflächenpolymerisatioen (Disäurechloride als Material 3 , Diamine als Medium 2). Weitere Varianten sind Polyelektrolytkomplexe (z.B. Na-Alginatlösungen als Material 3 und eine Lösung von protoniertem Chitosan als Medium 2). Durch eine parallele Ausrichtung der dosierten Stränge lassen sich Mikroröhrenbündel herstellen.

### Fünfte Ausführungsform

In einer Ausführungsform sind in den verwendeten Materialien organische und anorganische Füllstoffe enthalten, um dreidimensionale Objekte bestehend aus Multiphasen-Polymeren und Verbundwerkstoffen herzustellen. Beispielsweise kann ein gefüllter wärmeaushärtbarer Kunststoff oder eine Heißschmelze eines Nanoverbundmaterials aus dem Dispenser 4 durch eine beheizte Nadel zu Wasser als Plotmedium zugegeben werden.

Um eine höhere Auflösung, bessere Toleranzen und schnellere Bildungsprozesse zu erreichen, können alternativ auch Mikrodispenser mit separat ansteuerbaren Vielfachdüsen verwendet werden.

### Sechste Ausführungsform

In einer Weiterbildung der ersten Ausführungsform ist in dem vom Dispenser 4 abgegebenen Material 3 ein pharmazeutisch aktiver Stoff enthalten (z.B. Fibronectin oder Wachstumsfaktoren). Da während des Verfahrens nicht unbedingt hohe Temperaturen benötigt werden, kann der Prozeß z.B. bei Raumtemperatur stattfinden. Dann werden pharmazeutisch aktive Stoffe nicht zersetzt oder deaktiviert und sind in dem dreidimensionalen Objekt in ihrer aktiven Form enthalten. Das Objekt kann daher beispielsweise als Implantat verwendet werden, um im Körper das Zellwachstum um das Implantat herum zu fördern. Auch eine direkte Verarbeitung einer Suspension lebender menschlicher Zellen ist hier möglich. Gitterstrukturen wie in Ausführung 1 beschrieben, gewährleisten dabei die anschließende Versorgung der Zellen mit Nährmedium (in vitro) oder Blut (in vitro). Die in Fig.1 gezeigte Anordnung kann für diesen Zweck sterilisiert werden (UV-Licht, Ethylenoxid, Platzierung des Vorgangs in einem Reinraum).
Als Träger-Material 3 für die lebenden Zellen kommen dabei Gelatinelösungen, Kollagenlösungen, Na-Alginatlösungen, Albuminlösungen in Frage.

### Siebte Ausführungsform

In einer siebten Ausführungsform ist die Ausgangsöffnung 5 des Dispensers als zweidimensionales Düsenfeld mit jeweils einzeln ansteuerbaren, individuell beheizbaren Düsen ausgebildet. Dies vereinfacht die schichtweise Ausbildung eines dreidimensionalen Objekts dadurch, daß der Dispenser bei Verwendung einer Düsenreihe zur Ausbildung einer Schicht nur in x-Richtung und nicht in y-Richtung bewegt wird. Ferner ermöglicht die Verwendung eines Düsenfeldes, daß ein Objekt durch Bewegen des Dispensers nur in der z-Richtung ausgebildet werden kann.

### Achte Ausführungsform

Um Medium 2 und/oder Material 3 in einem definierten Zustand zu halten oder beim Plottvorgang gezielt eine thermisch induzierte Reaktion hervorzurufen, kann das Heizen oder Kühlen der Kartusche und Zuleitung für Material 3,
des Bades/Bauraums mit Plotmedium 2 oder
der Düse(n)separat oder in Kombination vorgenommen werden.

Als Material werden in dem erfindungsgemäßen Verfahren bevorzugt Oligourethane verwendet, weil die entstehenden Mikrostrukturen, wie auch die Zusammensetzungen der Polyurethane auf einfache Weise variiert werden können, um mechanische Eigenschaften des entstehenden dreidimensionalen Objektes zu steuern, das so beispielsweise gummiartig oder sehr starr ausgebildet werden kann. Oligourethane können als co-reaktives System, wie in der dritten Ausführungsform beschrieben, oder als Heißschmelze analog zur zweiten Ausführungsform eingesetzt werden.

Die Erfindung ermöglicht das Ausbilden einer Vielzahl von dreidimensionalen Strukturen mit verschiedenen Materialkombinationen. Durch die Verwendung eines oder mehrerer Monomere als Plotmedium kann zum Beispiel eine Faserstruktur und/oder eine Gerüststruktur eines anderen Materials in einer Matrix des Monomers oder der Monomere eingebaut werden und anschließend das oder die Monomere polymerisiert werden.

In den oben beschriebenen Ausführungsformen kann derzeit eine maximale Auflösung einer Mikrodot- oder Mikrostrangabscheidung mit kommerziell erhältlichen Dispensern von etwa 100 bis 200 µm erreicht werden, bestimmt durch den Innendurchmesser der Düse, den Arbeitsdruck, der Verfahrgeschwindigkeit der Düse(n) und insbesondere durch die rheologischen Eigenschaften des verwendeten Materials.

Die Mikrodot-Dosierung kann auf Lücke, auf Deckung oder spiralförmig erfolgen. Mikrostränge können mit einem kontinuierlichen Materialfluß, als individuelle Stränge, als Endlosstränge, spiralförmig gewunden oder der Freiform angepaßt dosiert werden. Zudem können flüssige Material-Komponenten als Mikrostrahl in das Plotmedium zugegeben werden. Eine andere Möglichkeit der Dosierung besteht in einer sogenannten Coextrusion, d.h. in der Dosierung eines Strangs mit einem Kern und einer Schale (Kern/Schale-Strang).

Rheologische Eigenschaften (Fließeigenschaften) können beeinflußt werden, wenn ein ausreichender Materialfluß und vorzugsweise eine hohe Thixotropie, d.h. das schnelle Ansteigen der Viskosität mit abnehmenden Scherraten erreicht werden soll. Ein kontrollierter Fluß nach der Zugabe des Materials ist erforderlich, um glatte Oberflächen zu erhalten, ohne den Zusammenbruch oder Verzug der 3D-Struktur zu verursachen. Zum Beispiel können selbstordnende oder segmentierte Oligomere benutzt werden, um die Rheologie zu steuern. Für größere dreidimensionale Objekte können größere flache Düsen oder Mehrfachdüsen benutzt werden, und der Fluß kann nach der Zugabe zum Beispiel durch eine entsprechende Wahl des Plotmediums angeglichen werden, um glatte Oberflächen zu erhalten.
Um die Thixotropie zu steuern, ermöglicht die Verwendung von selbstordnenden Nanofüllstoffen die Ausbildung von Netzstrukturen, die auf Scherkräfte reagieren.

Das erfindungsgemäße Verfahren erfordert keine thermische oder chemische Nachbehandlung des gebildeten dreidimensionalen Objekts. Bei der Wahl entsprechender Materialien müssen auch während des Verfahrens keine hohen Temperaturen eingestellt werden. Dies ermöglicht die Verwendung temperaturempfindlicher, biologisch oder pharmazeutisch aktiver Materialien entweder als Zusatz, wie beispielsweise Proteine, Wachstumsfaktoren und lebende Zellen, aber auch als Matrixmaterial, wie beispielsweise Hyaluronsäure, Gelatine, Collagen, Alginsäure und Ihre Salze, Chitosan und seine Salze. So können erstmalig in einem Schritt biokompatible und bioabbaubare Träger hergestellt werden, die eine definierte, frei wählbare Form aufweisen und thermisch und toxikologisch hochsensible Stoffe oder Strukturen beinhalten. Derartige Träger sind für den Bereich des Tissue Engineering von großer Bedeutung. Besonders die neuartige Möglichkeit des Plottens eines oder mehrerer Zelltypen (mittels mehrerer Behälter 4 und mehrer Düsen 5) an räumlich genau definierten Stellen in einer genau einstellbaren dreidimensionalen Struktur, die auch Poren für Nährstoffversorgung und Entsorgung von Stoffwechselprodukten zuläßt, ist wichtig. Organe von Säugetieren bestehen aus einem Stützgewebe (z.B. Collagen) und höchst unterschiedlichen Typen von Zellen, die verschiedenste Funktionen wahrnehmen (z.B. Leberzellen). Eine gleichzeitige in-vitro-Zucht verschiedener Zelltypen bereitet große Schwierigkeiten, wegen unterschiedlicher Wachstumsgeschwindigkeiten und Wachstumsbedingungen. Ihre gleichzeitige Strukturierung zu Organen ist bisher nur für einfache Organe (z.B. die Haut) geglückt. Dagegen kann eine derartig-komplexe Struktur mittels der hier vorgestellten Erfindung realisiert werden.
Als Beispiel kann hier für Medium 2 eine wässrige Lösung von Calciumionen, Thrombin und Gelatine (zur Viskostiätserhöhung) dienen; Material 3 ist dann eine wässrige Lösung von humanem Fibrinogen, Natriumalginat und lebenden Zellen.
Zwei Mechanismen führen dann zur Gelierung: a) die Komplexbildung des Alginats zum unlöslichen Calciumalginat und b) die Gelierung des Fibrinogens zum Fibrin.
Auch hier kann durch Zusatz von anorganischen oder organischen Füllstoffen sowohl die Verarbeitbarkeit des Materials 3 eingestellt werden, als aber auch eine Verbesserung der mechanischen Eigenschaften des fertigen dreidimensionalen Objektes erzielt werden.
Als Beispiel kann hier der Zusatz von pulverförmigem Hydroxylapatit (Hauptmineral des Säugetierknochens) dienen. So kann in Verbindung mit lebenden Knochenzellen ein dreidimensionales Objekt hergestellt werden, welches zur Behebung von Knochendefekten dienen kann.
Ebenso können weitere Anwendungen der Erfindung im Bereich der Freisetzung von Wirkstoffen liegen. Die Erfindung ermöglicht z. B. die Herstellung von genau an den Patienten angepaßten Wirkstoffträgern; dies kann z.B. zur langsamen Freisetzung eines Wirkstoffs - der Wirkstoff befindet sich dabei im Material 3 selbst und nicht auf der Oberfläche - im Gehirn dienen, indem ein dreidimensionales Objekt der Hinrinde angepaßt aufgelegt wird und der Wirkstoff direkt im Gehirn freigesetzt wird und nicht die Blut-Hirnschranke überwinden muß. Dies ist für die postoperative Behandlung von Hirntumorpatienten von Bedeutung.

Die Erfindung führt weiterhin zu dem Vorteil, daß sowohl für medizinische Anwendungen als auch für die Herstellung von Prototypen in der Industrie und in der Wissenschaft dreidimensionale Objekte individuell herstellbar sind.

Zudem können kleinste Strukturen ausgebildet werden, da die erreichte strukturelle Auflösung im Bereich von 150 dpi (170µm) liegt und auf einfache Weise variierbar ist, in Abhängigkeit vom Innendurchmesser der verwendeten Düse(n), des Arbeitsdrucks bei der Zugabe, der Zugabegeschwindigkeit des Materials 3, der Verfahrgeschwindigkeit der Düse(n), der Rheologie von Plotmedium und Material und der übrigen Materialeigenschaften.
Ferner kann bei Verwendung von Mehrfachdüsen, die als Feld oder Matrix angeordnet sind, eine Auflösung von 600 dpi oder mehr erreicht werden.
Die Mehrfachdüsen sind hierbei als mikromechanisches System aufgebaut, bei dem die einzelnen Düsen ventilgesteuert sind (die Düsen-, bzw. Ausgangsöffnungen sind Feld- oder Matrixförmig auf einer gemeinsamen Düsenplatte angeordnet)und an ihrer bestimmten Feld- oder Matrixposition jeweils eine Ausgangsöffnung zu einer gemeinsamen Düsenkammer darstellen, die unter geregeltem Druck mit dem Material 3 versorgt wird, vergleichbar mit dem "Common Rail" Prinzip aus der Dieseleinspritztechnik).

Das Ausbilden dreidimensionaler Objekte in flüssigen Medien, deren Dichten gleich oder ähnlich ,d.h. etwas kleiner/größer der Dichte des zugegebenen Materials sind und so zur Auftriebskompensation des Materials 3 dienen, oder das Zugeben in thixotrope oder gelförmige Medien, um den Materialfluß des dosierten Materials 3 in dem Medium 2 auf ein Minimum zu reduzieren, ermöglicht es, bei der Ausbildung dreidimensionaler Objekte, die Vorsprünge, Hinterschneidungen und/oder Hohlräume aufweisen, ohne Stützstrukturen zu arbeiten.

Ein weiterer Vorteil des Verfahrens besteht darin, daß eine Vielzahl von reaktiven und nicht-reaktiven Materialien verwendet werden kann. Zum Beispiel können co-reaktive Systeme und Heißschmelzen mit einer im Vergleich zu üblichen Polymerschmelzen niedrigeren Viskosität eingesetzt werden.

Die Vorrichtung und das Verfahren eignen sich nicht nur für biomedizinische Anwendung, sondern auch für die bürotaugliche "Desktop"-Erstellung von dreidimensionalen Objekten und zum Rapid-Prototyping.

Wie in Fig. 4 gezeigt ist, wird in einer weiteren bevorzugten Ausführungsform der Erfindung entweder dem Medium (2) oder bevorzugt dem Material (3) eine Substanz (10) zugegeben, die die Reaktion zwischen dem Medium (2) und dem Material (3) bzw. deren reaktiven Komponenten verzögert. Diese Substanz 10 bewirkt, daß eine gute Haftung des über den Dispenser 4 zugegebenen Materials an bereits ausgehärteten Strukturen 30 des Materials 3 , welche z.B. in einer vorhergehenden Plotebene liegen, erzielt wird. Die reaktionsverzögernde Substanz 10 wird so gewählt, daß die Reaktion zwischen den Reaktionspartnern 2 und 3 bzw. deren reaktiven Inhaltsstoffen, die hauptsächlich zuerst an der Grenzfläche zwischen bereits ausgehärtetem Material 30 und zugegebenem Material 3 stattfindet, um eine Zeitspanne t (Verzögerungszeit) verzögert wird, die ausreicht, daß das zugegebene Material 3 an den bereits ausgehärteten bzw. verfestigten Strukturen 30 anhaftet bevor es mit dem Medium 2 reagiert. In dem in Fig. 4 gezeigten Ausführungsbeispiel wird die Verzögerungszeit t vorgegeben durch die Zeit, die das Material 3 benötigt, um von einem Abschnitt 30₁ zu einem Abschnitt 30₂ einer bereits verfestigten Struktur zu fließen. Die Verzögerungszeit liegt je nach verwendeten Materialien und Dosiergeschwindigkeiten zwischen etwa 1/100s und etwa einigen Sekunden. Als reaktionsverzögernde Substanzen kommen unterschiedliche Substanzen, je nach dem verwendeten co-reaktiven System aus Medium 2 und Material 3 in Frage. Die reaktionsverzögernde Substanz 10 bewirkt eine Deaktivierung der reagierenden Moleküle entweder des Materials 3 oder des Mediums 2, insbesondere der des Mediums 2, die in das Material 3 eindringen, während dieses zugegeben wird. Nach einiger Zeit werden die Moleküle der reaktionsverzögernden Substanz 10 selbst inaktiv, so daß ihre Wirkung nicht mehr ausreicht, die Reaktion zwischen dem Material 3 und dem Medium 2 zu verhindern.

Beispiele für die reaktionsverzögernden Substanzen sind die folgenden: für anionische Polyelektrolyte, z.B. Alginsäure, als reaktive Komponente in dem Material 3 und Substanzen mit mehrwertigen Kationen, z.B. Calcium, als reaktive Komponente des Mediums 2 kommen als reaktionsverzögernde Substanzen beispielsweise EDTA, Acetylsalicylsäure oder Heparin in Frage, wobei die mehrwertigen Kationen maskiert werden, oder SulfatIonen, wobei die mehrwertigen Kationen ausgefällt werden. Für kationische Polyelektrolyte, z.B. Chitosan, als reaktive Komponente in dem Material 3 und Substanzen mit mehrwertigen Anionen als reaktive Komponente des Mediums 2 kommen als reaktionsverzögernde Substanzen beispielsweise Ca, Ba, oder Sr-Ionen in Frage, wobei die mehrwertigen Anionen ausgefällt werden, oder kurzkettige kationische Polyelektrolyte, wobei die mehrwertigen Anionen maskiert werden.

Für Fibrinogen als reaktive Komponente des Materials 3 und Thrombin und/oder Calcium als reaktive Komponente des Mediums 2 sind als reaktionsverzögernde Substanz 10 Antikoagulantien, z.B. Heparin, geeignet, wobei Calciumionen deaktiviert und/oder Thrombin inhibiert wird.

Für ein Monomer mit einem radikalischen Initiator, z.B. BPO, als reaktive Komponente des Materials 3 und ein Coinitiator, z.B. Amin, als reaktive Komponente des Mediums 2 ist als reaktionsverzögernde Substanz 10 ein Radikalfänger wie ein sterisch gehindertes Phenol geeignet, der entstehende Radikale vernichtet.

Es versteht sich, daß obige Aufzählung nur beispielhaft ist und daß jede reaktionsverzögernde Substanz verwendet werden kann, die für ein spezielles co-reaktives System aus Material 3 und Medium 2 zu einer definierten Reaktionsverzögerungszeit führt. Die beschriebene Ausführungsform ist anwendbar im Zusammenhang mit allen vorgenannten Ausführungsformen.

In einer weiteren bevorzugten Ausführungsform werden reaktionsverzögernde Substanzen als Substanzen beigefügt die die reaktive Komponente in Material 3 oder Medium 2 vor unerwünschten Reaktionen schützen bzw. solche verhindern. Beispielsweise kann Vitamin E (Tocopherol) als reaktionsverzögernde Substanz bzw. Inhibitor verwendet werden für den Fall, daß als Material 3 ein thermoplastisch verarbeitbares dosierbares Polymer verwendet wird, um dieses vor Oxidation zu schützen.

Das beschriebene Verfahren gemäß allen vorgenannten Ausführungsformen ist nicht darauf beschränkt, daß als Material 3 oder als Medium 2 reine Materialien verwendet werden. Es können auch Mischungen von Materialien verwendet werden. Als Mischungen für das Material 3 sind beispielsweise Blends von Polyelektrolyten, Fibrinogen, Fibrin und anderen erwähnten Stoffen möglich.

In einer weiteren Ausführungsform ist es möglich als Material 3 ein Material zu verwenden, welches einen darin gelösten Stoff enthält der beim Übergang in das Medium 2 durch einen Wechsel der Lösungseigenschaft ausfällt und eine feste Struktur bildet. Diese Ausführungsform ist z.B. zum Plotten von Knochenzementen auf der Basis von Polymethylmethacrylaten und Calciumphosphaten zur Verzögerung der Aushärtung anwendbar. Es sind Knochenzemente bekannt, die auf der Polymerisation von Polymethylmethacrylaten mit Phosphaten, z.B. Hydroxylapatit, als Füllstoff basieren. Festes Polymethylmethacrylat wird in Methylmethacrylat, welches ein Monomer ist, gelöst. Die entstehende hochviskose Lösung wird dann mit der mineralischen Phosphatkomponente gemischt. Beim 3D-Plotten wird ein zweikomponentiges System aus Initiator und Co-Initiator verwendet. Die PMMA/MMA/Apatit-Paste bildet das Plotmaterial 3. Diesem wird der Initiator zugegeben, wobei die Polymerisation durch diesen noch nicht gestartet wird. Dem Plotmedium 2 wird der Co-Initiator zugegeben. Durch Kontakt der PMMA/MMA/Apatit-Paste mit dem Plotmedium, welches den Co-Initiator enthält, startet die Polymerisation. Die Aushärtezeit wird dabei möglichst kurz gewählt. Als Initiator wird z.B. Benzolperoxid und als Co-Initiator ein Amin verwen-det.

## Patentansprüche

1. Verfahren zum Herstellen eines dreidimensionalen Objekts mit
Bereitstellen eines nicht gasförmigen Mediums (2) in einem Behälter (1),
Positionieren einer Ausgangsöffnung (5) eines dreidimensional bewegbaren Dispensers (4) in dem Medium (2), Abgeben eines aus einer oder mehreren Komponente(n) bestehenden Materials (3) durch den Dispenser (4) in das Medium (2), und Bewegen des Dispensers (4) an die Stellen, die dem dreidimensionalen Objekt entsprechen, zum Ausbilden einer festen dreidimensionalen Struktur, **dadurch gekennzeichnet, daß** das Material (3) nach der Abgabe in das Medium (2) infolge des Kontakts mit dem Medium (2), ohne Bestrahlung, zur Ausbildung fester Strukturen führt.

2. Verfahren nach Anspruch 1, bei dem das Medium (2) in einer vorbestimmten Füllhöhe in dem Behälter (1) bereitgestellt wird und die Ausgangsöffnung (5) des Dispensers unterhalb der Füllhöhe des Mediums (2) in dem Behälter (1) positioniert wird.

3. Verfahren nach Anspruch 1 oder 2, bei dem die Dichte oder die thixotrope, gelartige, pastöse oder pulverförmige Konsistenz des Mediums (2) so eingestellt wird, daß eine Auftriebskompensation und Bewegungsdämpfung des Materials (3) erreicht wird.

4. Verfahren nach einem der Ansprüche 1 bis 3, bei dem aus dem Material (3) Mikrotropfen auf Lücke, auf Deckung oder spiralförmig gebildet werden, oder
ein oder mehrere Mikrostränge gebildet werden, wobei der oder die Mikrostränge individuell oder zusammenhängend, endlos oder portionsweise, spiralförmig gewunden oder linienförmig, mit einem kontinuierlichen oder diskontinuierlichen Materialfluß dosiert werden.

5. Verfahren nach einem der Ansprüche 1 bis 4, bei dem flüssige oder pastöse Komponenten des Materials (3) verwendet werden, das als Mikrotropfen oder als Mikrostrahl dosiert wird.

6. Verfahren nach einem der Ansprüche 1 bis 5, bei dem das Material (3) als Strang mit einem Kern und einer Schale dosiert wird.

7. Verfahren nach einem der Ansprüche 1 bis 6, bei dem eine Präzipitation des Mediums (2) und/oder des Materials (3) ausgeführt wird, oder
bei dem eine kontrollierte Präzipitation zur Ausbildung von Häuten um Substrukturen der dreidimensionalen Objekte ausgeführt wird, oder
bei dem das Medium (2) ein oder mehrere Fällmittel zum Ausfällen des Materials (3) enthält und das Material (3) ausgefällt wird.

8. Verfahren nach einem der Ansprüche 1 bis 7, bei dem das Material (3) co-reaktive Komponenten enthält, die miteinander reagieren, und/oder das erste Medium (2) eine co-reaktive Komponente enthält, die mit einer oder mehreren Komponenten des Materials (3) reagiert.

9. Verfahren nach Anspruch 8, bei dem eine Grenzflächenpolymerisation, eine Polykondensation oder eine Polyelektrolytkomplex-Bildung ausgeführt wird.

10. Verfahren nach einem der Ansprüche 1 bis 9, bei dem durch Entfernen des Materials (3) des Kerns eines Kern/Schale-Stranges oder durch Ausführen einer Grenzflächenpolymerisation und Entfernen des Materials (3), das bei der Grenzflächenpolymerisation nicht reagiert hat, Mikrohohlräume oder Mikroröhren gebildet werden.

11. Verfahren nach einem der Ansprüche 1 bis 10, bei dem das erste Medium (2) durch Zudosieren des Materials (3) durch das oder mit dem Material (3) gelöst, gebunden, geschmolzen, gehärtet oder verklebt wird, oder
bei dem das Material (3) durch Zudosieren in das Medium (2) durch das oder mit dem Medium (2) gelöst, gebunden, geschmolzen, gehärtet oder verklebt wird.

12. Verfahren nach einem der Ansprüche 1 bis 11, bei dem als Medium (2) ein flüssiges, gelartiges, thixotropes, pastöses, pulverförmiges, als Granulat vorliegendes oder festes Material verwendet wird, und/oder als Material (3) ein flüssiges, gelartiges, pastöses Material verwendet wird.

13. Verfahren nach einem der Ansprüche 1 bis 12, bei dem das Medium (2) aus der Gruppe ausgewählt ist, die Wasser, Gelatine, eine wässrige Polyaminlösung und eine Mischung davon enthält,
und das Material (3) aus der Gruppe ausgewählt ist, die bei Raumtemperatur flüssige Oligomere und Polymere, Schmelzen von Oligomeren und Polymeren, reaktive Oligomere und Polymere, Monomere, Gele, Pasten, Plastisole, Lösungen, Zwei-Komponenten-Systeme mit co-reaktiven Komponenten, Dispersionen und Mischungen davon enthält.

14. Verfahren nach Anspruch 13, bei dem für das Material (3) als Gel ein oder mehrere ein- oder zwei-komponentige Silikonkautschuke, als Pasten ein oder mehrere gefüllte Oligomere und Polymere mit ein oder mehreren organischen und anorganischen Füllstoffen und als Zwei-Komponenten-Systeme mit co-reaktiven Komponenten ein oder mehrere Isocyanat/Polyamid-Systeme benutzt werden, oder
als Material (3) ein oder mehrere Oligourethane verwendet werden.

15. Verfahren nach einem der Ansprüche 1 bis 14, bei dem anorganische und organische Füllstoffe im Medium (2) oder in dem Material (3) enthalten sind.

16. Verfahren nach einem der Ansprüche 1 bis 15, bei dem als Medium (2) ein oder mehrere Monomere verwendet werden, eine Faserstruktur und/oder eine Gerüststruktur in einer Matrix des Monomers oder der Monomere eingebaut wird und anschließend das oder die Monomere polymerisiert werden.

17. Verfahren nach einem der Ansprüche 1 bis 16, bei der die rheologischen Eigenschaften des Mediums (2) und des Materials (3) durch Verwenden organischer und anorganischer Nanofüllstoffe eingestellt werden.

18. Verfahren nach einem der Ansprüche 1 bis 17, bei dem biologisch aktive Substanzen in dem ersten und/oder in dem zweiten Material (2,3) enthalten sind.

19. Verfahren nach Anspruch 18, bei dem ein oder mehrere Zelltypen an räumlich genau definierten Stellen zur Ausbildung einer genau einstellbaren dreidimensionalen Struktur abgegeben werden.

20. Verfahren nach Anspruch 19, bei dem Poren für die Nährstoffversorgung und für die Entsorgung von Stoffwechselprodukten in der dreidimensionalen Struktur vorgesehen werden,

21. Verfahren nach einem der Ansprüche 1 bis 20, **dadurch gekennzeichnet, daß** zu dem aus dem Medium (2) und dem Material (3) bestehenden System eine eine Reaktion zwischen dem Medium (2) bzw. einem seiner Inhaltsstoffe und dem Material (3) bzw. einem seiner Inhaltsstoffe verzögernde Substanz (10) zugegeben wird.

22. Verfahren nach Anspruch 21, **dadurch gekennzeichnet, daß** die Substanz (10) dem Material (3) zugegeben wird.

23. Verfahren nach Anspruch 21 oder 22, **dadurch gekennzeichnet, daß** durch das Zugeben der Substanz (10) eine Reaktionszeit (t) zwischen dem Medium (2) bzw. einem seiner Inhaltsstoffe und dem Material (3) bzw. einem seiner Inhaltsstoffe um soviel verzögert wird, daß das Material (3) nach der Abgabe in das Medium (2) an bereits ausgehärtetem Material (3) anhaftet bevor es aushärtet bzw. zur Ausbildung fester Strukturen führt.

24. Vorrichtung zur Ausführung des Verfahrens nach einem der vorhergehenden Ansprüche mit
einem Behälter (1) für das Medium (2),
einem dreidimensional bewegbaren Dispenser (4) mit einem oder mehreren Kartuschen für eine oder mehrere Materialkomponente(n) (3), zum Abgeben des Materials (3) in das Medium (2),
wobei der Dispenser (4) eine Ausgangsöffnung (5) aufweist, die unterhalb der Füllhöhe des ersten Materials (2) in dem Behälter (1) positionierbar ist, **dadurch gekennzeichnet, daß** die Vorrichtung kein Bestrahlungshilfsmittel aufweist, und das Material (3) und das Medium (2) in der Lage sind, daß das Material (3) nach der Abgabe in das Medium (2) infolge des Kontakts mit dem Medium (2),
ohne Bestrahlung, zur Ausbildung fester Strukturen führt.

25. Vorrichtung nach Anspruch 24, bei der
die Ausgangsöffnung (5) als eindimensionale Düse oder als zweidimensionales Düsenfeld mit einzeln ansteuerbaren, individuell beheizbaren und/oder ventilgesteuerten Düsen ausgebildet ist,
und der Dispenser (4) ein oder mehrere Behälter für die Komponenten des Materials (3) aufweist.

26. Vorrichtung nach Anspruch 25, die so ausgebildet ist, daß die Kartuschen für die Komponenten des Materials (3), und/oder der Behälter (1) und/oder die Düse(n) so heizoder kühlbar sind, daß das Medium (2) und/oder das Material (3) in einem definierten Zustand gehalten, oder beim Abgeben und Kontaktieren des Materials (3) mit dem Medium (2) gezielt eine thermisch induzierte Reaktion hervorgerufen wird.

27. Verwendung von biologisch oder pharmazeutisch aktiven Substanzen in einem Verfahren nach einem der Ansprüche 1 bis 23 und/oder einer Vorrichtung nach einem der Ansprüche 24 bis 26 zur Herstellung von biomedizinischen oder biologisch aktiven dreidimensionalen Objekten.

28. Verwendung nach Anspruch 27, wobei als biologisch oder pharmazeutisch aktive Substanzen Proteine, Wachstumsfaktoren und lebende Zellen, Hyaluronsäure, Gelatine, Collagen, Alginsäure und Ihre Salze, Chitosan und seine Salze als Zusätze oder als Matrixmaterial verwendet werden.

## Claims

1. A process for producing a three-dimensional object, comprising
provision of a non-gaseous medium (2) in a container (1),
positioning of an outlet opening (5) of a three-dimensionally movable dispenser (4) in the medium (2),
discharging of a material (3) consisting of one or more component(s) through the dispenser (4) into the medium (2), and
moving the dispenser (4) to the points which correspond to the three-dimensional object, to form a solid three-dimensional structure,
**characterized in that** the material (3), after being discharged into the medium (2), leads to the formation of solid structures due to the contact with the medium (2) without irradiation.

2. The process according to claim 1, in which the medium (2) is provided in the container (1) at a predetermined filling height and the outlet opening (5) of the dispenser is positioned below the filling height of the medium (2) in the container (1).

3. The process according to claim 1 or 2, in which the density or the thixotropic, gel-like, pasty or pulverulent consistency of the medium (2) is adjusted such that a buoyancy compensation and a damping of the movement of the material (3) is achieved.

4. The process according to one of claims 1 to 3, in which microdroplets are formed with gaps, with coincidence or spirally from the material (3), or one or more microstrands are formed, wherein the microstrand or microstrands are metered individually or coherently, continuously or portion-wise, spirally wound or linearly, with continuous or discontinuous material flow.

5. The process according to one of claims 1 to 4, in which liquid or pasty components of the material (3) are used, which is metered as microdrops or as a microjet.

6. The process according to one of claims 1 to 5, in which the material (3) is metered as a strand with a core and a shell.

7. The process according to one of claims 1 to 6, in which precipitation of the medium (2) and/or of the material (3) is executed, or
in which controlled precipitation for forming skins around substructures of the three-dimensional objects is executed, or
in which the medium (2) contains one or more precipitating agents for precipitating the material (3) and the material (3) is precipitated.

8. The process according to one of claims 1 to 7, in which the material (3) contains co-reactive components which react with one another, and/or the first medium (2) contains a co-reactive component which reacts with one or more components of the material (3).

9. The process according to claim 8, in which interfacial polymerisation, polycondensation or polyelectrolyte-complex formation is executed.

10. The process according to one of claims 1 to 9, in which by removing the material (3) of the core of a core/shell strand or by executing interfacial polymerisation and removing the material (3), which has not reacted during interfacial polymerisation, microcavities or microtubes are formed.

11. The process according to one of claims 1 to 10, in which the first medium (2) is dissolved, bound, melted, cured or adhered by metering the material (3) by the material (3) or with it, or in which the material (3) is dissolved, bound, melted, cured or adhered by metering into the medium (2) by the medium (2) or with it.

12. The process according to one of claims 1 to 11, in which a liquid, gel-like, thixotropic, pasty, pulverulent, granulated or solid material is used as medium (2), and/or a liquid, gel-like, pasty material is used as material (3).

13. The process according to one of claims 1 to 12, in which the medium (2) is selected from the group which contains water, gelatine, an aqueous polyamine solution and a mixture thereof,
and the material (3) is selected from the group which contains oligomers and polymers which are liquid at room temperature, melts of oligomers and polymers, reactive oligomers and polymers, monomers, gels, pastes, plastisols, solutions, two-component systems with co-reactive components, dispersions and mixtures thereof.

14. The process according to claim 13, in which one or more one-component or two-component silicone rubbers are used for the material (3) as gel, one or more filled oligomers and polymers with one or more organic and inorganic fillers are used as pastes and one or more isocyanate/polyamide systems are used as two-component systems with co-reactive components, or one or more oligourethanes are used as material (3).

15. The process according to one of claims 1 to 14, in which inorganic and organic fillers are present in the medium (2) or in the material (3).

16. The process according to one of claims 1 to 15, in which one or more monomers are used as medium (2), a fibrous structure and/or a backbone structure is incorporated in a matrix of the monomer or the monomers and the monomer or monomers are then polymerised.

17. The process according to one of claims 1 to 16, in which the rheological properties of the medium (2) and of the material (3) are adjusted by using organic and inorganic nanofillers.

18. The process according to one of claims 1 to 17, in which biologically active substances are present in the first and/or in the second material (2, 3).

19. The process according to claim 18, in which one or more cell types are released at spatially precisely defined points for forming a precisely adjustable three-dimensional structure.

20. The process according to claim 19, in which pores for the nutrient supply and for the removal of metabolic products are provided in the three-dimensional structure.

21. The process according to one of claims 1 to 20, **characterised in that** a substance (10) delaying a reaction between the medium (2) or one of its ingredients and the material (3) or one of its ingredients is added to the system consisting of the medium (2) and the material (3).

22. The process according to claim 21, **characterised in that** the substance (10) is added to the material (3).

23. The process according to claim 21 or 22, **characterised in that** by adding the substance (10), a reaction time (t) between the medium (2) or one of its ingredients and the material (3) or one of its ingredients, is delayed by so much that the material (3) adheres to already cured material (3) after release into the medium (2) before it cures or leads to the formation of solid structures.

24. A device for executing the process according to one of the preceding claims, comprising a container (1) for the medium (2),
a three-dimensionally moveable dispenser (4) comprising one or plural cartridges for one or plural material component(s) (3), for releasing the material (3) into the medium (2), wherein the dispenser (4) has an outlet opening (5), which can be positioned below the filling height of the first material (2) in the container (1),
**characterized in that** the device does not comprise irradiation auxiliary means,
and that the material (3) and the medium (2) are such that the material (3), after the discharge into the medium (2), leads to the formation of solid structures due to the contact with the medium (2) without irradiation.

25. The device according to claim 24, in which the outlet opening (5) is designed as a one-dimensional nozzle or as a two-dimensional nozzle panel with singly actuatable, individually heatable and/or valve-controlled nozzles.
and the dispenser (4) has one or more containers for the components of the material (3).

26. The device according to claim 25, which is designed such that the cartridges for the component(s) of the material (3), and/or the container (1) and/or the nozzle(s) can be heated or cooled so that the medium (2) and/or the material (3) is held at a defined distance, or a thermally induced reaction is caused specifically when discharging and contacting the material (3) with the medium (2).

27. Use of biologically or pharmaceutically active substances in a process according to one of claims 1 to 23 and/or a device according to one of claims 24 to 26 for producing biomedical or biologically active three-dimensional objects.

28. Use according to claim 27, wherein proteins, growth factors and living cells are used as biologically or pharmaceutically active substances, hyaluronic acid, gelatine, collagen, alginic acid and its salts, chitosan and its salts are used as additives or as matrix material.

## Revendications

1. Procédé de fabrication d'un objet tridimensionnel, comprenant
la préparation d'un milieu (2) non gazeux dans un récipient (1),
le positionnement d'une ouverture de sortie (5) d'un distributeur (4) déplaçable de façon tridimensionnelle dans le milieu (2),
la fourniture d'un matériau formé d'un ou plusieurs composants, au moyen du distributeur (4) dans le milieu (2), et le déplacement du distributeur (4) aux emplacements correspondant à l'objet tridimensionnel, pour former une structure tridimensionnelle solide,
**caractérisé en ce que** le matériau (3), après délivrance dans le milieu (2), suite au contact avec le milieu (2), sans irradiation, conduit à la formation des structures solides.

2. Procédé selon la revendication 1, dans lequel le milieu (2) est préparé à une hauteur de remplissage prédéterminée dans le récipient (1), et l'ouverture de sortie (5) du distributeur est positionnée au-dessous de la hauteur de remplissage du milieu (2) dans le récipient (1).

3. Procédé selon la revendication 1 ou 2, dans lequel la masse volumique ou la consistance thixotrope, gélatineuse, pâteuse ou pulvérulente, du milieu (2), est réglée de manière à obtenir une compensation de la poussée ascensionnelle et un amortissement du déplacement du matériau (3).

4. Procédé selon l'une des revendications 1 à 3, dans lequel des microgouttes sont formées à partir du matériau (3), en laissant des interstices, en recouvrement ou en forme spirale, ou bien un ou plusieurs micro-brins sont formés, le ou les micro-brins séparément ou attachés ensemble, de façon continue ou par portions, étant enroulés en forme spirale, ou bien se présentant sous forme linéaire, en étant dosés avec un flux de matériau continu ou discontinu.

5. Procédé selon l'une des revendications 1 à 4, dans lequel des composants liquides ou pâteux du matériau (3) sont utilisés, le matériau (3) étant dosé sous forme de microgouttes ou bien de micro-jets.

6. Procédé selon l'une des revendications 1 à 5, dans lequel le matériau (3) est dosé sous forme de brin, avec un noyau et une coquille.

7. Procédé selon l'une des revendications 1 à 6, dans lequel une précipitation du milieu (2) et/ou du matériau (3) est réalisée, ou
dans lequel une précipitation contrôlée est effectuée pour former des peaux autour de structures des objets tridimensionnels, ou
dans lequel le milieu (2) contient un ou plusieurs moyens précipitants, servant à la précipitation du matériau (3), et le matériau (3) est précipité.

8. Procédé selon l'une des revendications 1 à 7, dans lequel le matériau (3) contient des composants co-réactifs, réagissant entre eux, et/ou le premier milieu (2) contient un composant co-réactif réagissant avec un ou plusieurs composants du matériau (3).

9. Procédé selon la revendication 8, dans lequel une polymérisation de la surface limite, une polycondensation ou une formation de complexe poly-électrolytes, est réalisée.

10. Procédé selon l'une des revendications 1 à 9, dans lequel des micro-espaces creux ou des micro-tubes sont formés, par élimination du matériau (3) du noyau d'un brin à noyau/coquille ou par réalisation d'une polymérisation des surfaces limite et enlèvement du matériau (3) qui n'a pas réagi lors de la polymérisation de la surface limite.

11. Procédé selon l'une des revendications 1 à 10, dans lequel le premier milieu (2) est dissous, lié, fondu, durci, collé, par addition dosée du matériau (3), par le ou avec le matériau (3), ou dans lequel le matériau (3) par addition dosée dans le milieu (2) est dissout, lié, fondu, durci ou collé, par le ou avec le milieu (3).

12. Procédé selon l'une des revendications 1 à 11, dans lequel on utilise comme milieu (2) un matériau liquide, gélatineux, thixotrope, pâteux, pulvérulent, se présentant sous forme de granulat ou solide, et/ou on utilise comme matériau (3) un matériau liquide, gélatineux, pâteux.

13. Procédé selon l'une des revendications 1 à 12, dans lequel le milieu (2) est sélectionné dans le groupe contenant l'eau, la gélatine, une solution aqueuse de polyamine, et un mélange de ceux-ci,
et le matériau (3) est sélectionné dans le groupe formé d'oligomères et de polymères, liquides à la température ambiante, de bains fondus d'oligomères et de polymères, d'oligomères et de polymères réactifs, de monomères, de gels, de pâtes, de plastisols, de solutions, de systèmes et de composants ayant des composants co-réactifs, des dispersions et des mélanges de ceux-ci.

14. Procédé selon la revendication 13, dans lequel on utilise pour le matériau (3), en tant que gel, un ou plusieurs caoutchoucs au silicone à un ou deux composants, en tant que pâtes, un ou plusieurs oligomères et polymères munis d'une charge, avec une ou plusieurs charges organiques et non organiques, et, comme système à deux composants, avec des composants co-réactifs, un ou plusieurs systèmes isocyanate/polyamide, ou bien on utilise en tant que matériau (3) un ou plusieurs oligo-uréthanes.

15. Procédé selon l'une des revendications 1 à 14, dans lequel des charges non organiques et organiques sont contenues dans le milieu (2) ou dans le matériau (3).

16. Procédé selon l'une des revendications 1 à 15, dans lequel, en tant que milieu (2), on utilise un ou plusieurs monomères, on intègre dans une matrice du monomère ou des monomères une structure fibreuse et/ou une structure à treillis, et l'on polymérise ensuite le ou les monomères.

17. Procédé selon l'une des revendications 1 à 16, dans lequel les propriétés rhéologiques du milieu (2) et du matériau (3) sont réglées par utilisation de nano-charges, organiques et non organiques.

18. Procédé selon l'une des revendications 1 à 17, dans lequel des substances biologiquement actives sont contenues dans le premier et/ou le deuxième matériau (2, 3).

19. Procédé selon la revendication 18, dans lequel un ou plusieurs types de cellule sont délivrés en des emplacements, définis avec précision spatialement, pour former une structure tridimensionnelle, réglable avec précision.

20. Procédé selon la revendication 19, dans lequel des pores sont prévues dans la structure tridimensionnelle, pour l'alimentation en substances nutritives et pour l'élimination des produits de métabolisme.

21. Procédé selon l'une des revendications 1 à 20, **caractérisé en ce que**, au système formé du milieu (2) et du matériau (3), est ajoutée une substance (10) retardant une réaction entre le milieu (2) ou l'un de ses constituants, et entre le matériau (3) ou l'un de ses constituants.

22. Procédé selon la revendication 21, **caractérisé en ce que** la substance (10) est ajoutée au matériau (3).

23. Procédé selon la revendication 21 ou 22, **caractérisé en ce que**, suite à l'addition de la substance (10), un temps de réaction (t), entre le milieu (2) ou l'un de ses constituants et le matériau (3) ou l'un de ses constituants, est retardé suffisamment pour que le matériau (3), après délivrance dans le milieu (2), adhère sur du matériau (3) déjà durci, avant d'être durci ou de mener à la réalisation de structures solides.

24. Dispositif de mise en oeuvre du procédé selon l'une des revendications précédentes, avec un récipient (1) pour le milieu (2), un distributeur (4) déplaçable de façon tridimensionnelle, avec une ou plusieurs cartouches pour un ou plusieurs composants de matériau (3), pour délivrance du matériau (3) dans le milieu (2),
où le distributeur (4) présente une ouverture de sortie (5) positionnable au-dessous du niveau de remplissage du premier matériau (2) dans le récipient (1),
**caractérisé en ce que** le dispositif ne présente aucun moyen auxiliaire d'irradiation, et le matériau (3) et le milieu (2) sont en mesure de faire que le matériau (3), après délivrance dans le milieu (2), par suite du contact avec le milieu (2), conduit sans irradiation à former des structures solides.

25. Dispositif selon la revendication 24, dans lequel l'ouverture de sortie (5) est réalisée sous la forme de buse monodimensionnelle ou de champ de buses bidimensionnel, avec des buses pouvant être commandées individuellement, pouvant être chauffées individuellement et/ou commandées individuellement par des soupapes,
et le distributeur (4) présentant un ou plusieurs récipients pour les composants du matériau (3).

26. Dispositif selon la revendication 25, réalisé de manière que les cartouches prévues pour les composants du matériau (3) et/ou le récipient (1) et/ou la ou les buses sont susceptibles d'être chauffées ou refroidies, en ce que le milieu (2) et/ou le matériau (3) sont maintenus en un état défini, ou bien, lors de la délivrance et la mise en contact du matériau (3) avec le milieu (2), une réaction, induite de façon thermique, est provoquée à dessein.

27. Utilisation de substances actives biologiquement ou pharmaceutiquement dans un procédé selon l'une des revendications 1 à 23 et/ou un dispositif selon l'une des revendications 24 à 26, pour produire des objets tridimensionnels, biomédicaux ou biologiquement actifs.

28. Utilisation selon la revendication 27, dans laquelle, en tant que substances actives biologiquement ou pharmaceutiquement, sont utilisées des protéines, des facteurs de croissance et des cellules vivantes, de l'acide hyaluronique, la gélatine, du collagène, de l'acide alginique et leurs sels, du chitosane et ses sels en tant qu'additifs ou en tant que matériau de matrice.
